# EUROPÄISCHE PATENTANMELDUNG

(11) **EP 2 322 262 A1**
(43) Veröffentlichungstag der Anmeldung: **18.05.2011**
(21) Anmeldenummer: 10014661.2
(22) Anmeldetag: 16.11.2010
(51) Int. Cl.: B01D 39/06

(54) **Filtermaterial für Filter in Wasserbehandlungs-und Aufbereitungsanlagen**

(30) Priorität: 16.11.2009 DE 102009053049
(71) Anmelder: Bräutigam Kunststoffsysteme GmbH, 07987 Mohlsdorf (DE)
(72) Erfinder: Bräutigam, Roland, 08412 Werdau (DE)
(74) Vertreter: Auerbach, Bettina

(57) **Zusammenfassung**

Die Erfindung betrifft ein Filtermaterial für Filter in Wasserbehandlungs- und Aufbereitungsanlagen zur Filtration von organischen Schwebstoffen und Algen. Die Filteranlagen finden ihren Einsatz in Pools, Freibädern, Hallenbädern, Schwimm- und Gartenteichen, Aquarien, Regenwasser- und Wasseraufbereitungssowie Trinkwasseraufbereitungsanlagen und ähnlichem. Das Filtermaterial ist dadurch gekennzeichnet, dass es aus einer mit zur Größe der zu filtrierenden Schmutzstoffe abgestimmten Korngrößenspektrum ausgestatteten Körnung aus ladungstechnisch neutralem Glas besteht.

## Beschreibung

Die Erfindung betrifft ein Filtermaterial für Filter in Wasserbehandlungs- und Aufbereitungsanlagen zur Filtration von organischen Schwebstoffen und Algen. Die Filteranlagen finden ihren Einsatz in Pools, Freibädern, Hallenbädern, Schwimm- und Gartenteichen, Aquarien, Regenwasser- und Wasseraufbereitungssowie Trinkwasseraufbereitungsanlagen und ähnlichem.

Verbreitet und dem Stand der Technik entsprechend werden für die Wasseraufbereitung von Schwimmbadwasser, Teichwasser oder Trinkwasser sowie Regenwasser Filteranlagen mit Filtermaterialfüllungen aus Kies, Sand, AFM oder anderen Materialien verwendet. Die Filter dienen dem Zurückhalten und Ausfiltrieren von Schwebstoffen aus dem Wasser und werden in unterschiedlichster Form sowie Größe eingesetzt.

Der jeweils eingesetzte Filtertyp ist abhängig von der Wasserart und den anfallenden zu filternden Stoffen.

Allen Filteranlagen liegt ein ähnliches Wirkprinzip vor. Die Filter werden mit dem zu filternden Wasser durchflutet. Das Filtermaterial hält bzw. filtert Schmutz, Schwebstoffe, Haare, Kleinteilchen und andere im Wasser befindliche Inhaltsstoffe während dem Durchlauf durch den Filter aus, indem diese Teilchen in den Filtermaterial-Lücken gesammelt werden.

Der Abfluss des Wassers aus dem Filter wird durch den Einsatz von so genannten Filterdüsen gewährleistet, die meist mit Schlitzen unterschiedlicher Schlitzweite versehen sind und nur das Wasser an sich sowie Teilchen kleiner der Schlitzweite aus dem Filter abfließen lassen. Somit werden das Filtermaterial selbst und die Filtrationsstoffe im Filter zurückgehalten.

Jeder Filter, egal mit welchem eingesetzten Filtermaterial, ist irgendwann so mit Filtrationsstoffen im Filtermaterial gesättigt, dass kaum noch oder nur sehr geringe Mengen Wasser den Filter durchlaufen können. Man spricht gebräuchlich dann von einem zugesetzten Filter.

Bei herkömmlich eingesetzten Filtermaterialien wie Kies und Sand ist zu verzeichnen, dass sich an den einzelnen Körnern des Filtermaterials selbst Bakterienfilme bilden. Diese Bakterienfilme führen dazu, dass die einzelnen Filtermaterialkömer auf Grund der gebildeten Bakterienschichten zusammen wachsen und einen relativ festen Verbund bilden. Mit zunehmender Wassertemperatur wird dieser Prozess um ein Vielfaches beschleunigt.

Der so entstandene Verbund der einzelnen Filtermaterialkörner lässt den Filter regelrecht zuwachsen und vermindert so die Filtrationswirkung erheblich. Zudem ist die entstandene Bakterienkultur ein erheblicher Infektionsherd.

Filteranlagen werden mit unterschiedlichem Betriebsdruck betrieben, die über wiederum unterschiedliche Druck-Anzeigesysteme überwacht werden können. Der angezeigte Druck im Filter lässt dabei Rückschlüsse über den Betriebszustand eines Filters erfahren. In allen Filtern zeigt die Erhöhung des Betriebsdrucks eine Erhöhung des Zusetzungsgrades im Filters an. Wird ein bestimmter Wert erreicht, muss der Filter gereinigt bzw. Rückgespült werden. Das Rückspülen eines verkrusteten Filters ist dann nur noch mit sehr großen Wasserdrücken oder nur noch unter Zuwirkung von Druckluft als Luft-Wassergemisch, bei sehr zugesetzten Filtern oft nur mit zusätzlichem Chlorschock möglich. Wobei die bereits auf den Filtermaterialkömem gebildeten Bakterienfilme nicht mit abgetragen werden können.

Sie bleiben vorhanden und führen dazu, dass nach jedem Rückspülvorgang der Prozess des wiederholten Bakterienwachstums noch schneller beginnen kann.

So entstehen im Filter selbst immer wieder anerobe Zonen mit aneroben Bakterien, die sich sehr negativ auf die Wasserqualität auswirken und auch eine Gefahr für den Nutzer des Wassers darstellen. Dies ist vor allem in Pool- und Schwimmbadanlagen, die mit Chlor desinfiziert werden, da sich Trichloramin bilden kann.

Um die Bildung von anaeroben Bakterien in Filtern und damit das Zuwachsen des Filtermaterials zu verhindern bzw. zu vermindern wurde für die Filtertechnik ein neues Filtermaterial, das AFM - ein mit negativer Ladung aktiviertes Filtermaterial entwickelt und hat sich für den im Einsatz von chemisch behandeltem Wasser in Pools und Schwimmbädern bewährt. Die Vorteile des AFM sind in der Behandlung von Wasser mit Chlor oder anderen Chemikalien sehr willkommen und haben dort auch Ihre eindeutige Bedeutung. Das sehr negativ geladene AFM führt aber auch dazu, dass die organischen Schwebstoffe und Mikroalgen im Wasser einem ladungstechnischen Einfluss unterliegen und nicht mehr als negativ geladene organische Stoffe zur Verfügung stehen. Werden zur besseren Filtrationsmöglichkeit dieser kleinen Teilchen aber nun keine synthetischen sondern biologische Flockungsmittel, zur Bildung größerer Flocken eingesetzt wirkt sich die, durch das sehr negativ geladene AFM hervorgerufene Ladungsänderung aller Wasserinhaltsstoffe wiederum negativ auf das Flockungsverhalten der organischen Stoffe aus.

Wird nun ein biologisches Flockungsmittel, wie in biologischen Wasserbehandlungsanlagen eingesetzt, welches selbst sehr positiv geladen ist, führt das Vorhandensein von AFM im Filter dazu, dass das positiv geladene biologische Flockungsmittel durch das negativ geladene AFM seine Wirkung bereits schon im Filter verliert und eine Möglichkeit der Flockung von organischen ( eigentlich auch negativ geladenen ) Schwebstoffen und Mikroalgen verhindert wird

Bei der biologischen Behandlung von Wasser ist der Einsatz von biologischen Flockungsmitteln aber Voraussetzung, um

Mikroalgen und kleinste organische Stoffteilchen im Wasser zu größeren filterbaren Flocken zu binden, die in Filtern aus dem Wasser entfernt werden sollen.

Der Erfindung liegt deshalb die Aufgabe zu Grunde eine technische Lösung zu schaffen, mit deren Hilfe die Mängel des bekannten Standes der Technik überwunden werden können. Insbesondere soll eine einfache, kostengünstige und praxisnahe Lösung für ein Filtermaterial zum Einsatz insbesondere für die Reinigung von biologisch behandelten Wasser geschaffen werden.

Erfindungsgemäß wird die Aufgabe im Wesentlichen durch die kennzeichnenden Merkmale des Anspruches 1 gelöst. Die vorteilhaften Ausgestaltungen sind in den Unteransprüchen beschrieben.

Dabei wurde ein neutrales Filtermaterial ( nbFM ) entwickelt, welches aus recyceltem blauem Glas besteht. Dieses Glas ist weder positiv noch negativ geladen und bietet dadurch die Möglichkeit des Einsatzes von positiv als auch negativ geladenen Zusatzstoffen in Wasserbehandlungs- und Wasseraufbereitungsanlagen, ohne das ein ladungstechnischer Einfluss vom Filtermaterial selbst vorliegt.

Das neutrale Filtermaterial aus Glas ( nbFM ) wird in speziellen Verfahren zu Körngrößen gemahlen, die den Körnungen herkömmlicher Filtermaterialien, wie Filterkies- oder Sand als auch denen aus AFM entsprechen und auf die Teilchengröße der zu filternden Schmutzstoffe auf den speziellen Einsatzfall abgestimmt werden kann. Somit besitzt es die gleichen filtertechnischen Voraussetzungen wie herkömmliches Filtermaterial. Die blaue Färbung wurde gewählt, um es auch optisch vom grünen AFM unterscheiden zu können.

Der Vorteil besteht darin, dass sich am neu entwickelten neutralen Filtermaterial (nbFM) kein bakterieller Belag bilden kann oder an ihm dauerhaft anhaften kann. Bereits durch leichtes Ab- und Umspülen oder Umwälzen mit oder im Wasser werden Filtrationsstoffe, die sich in den Kornlücken des neutralen Filtermaterials (nbFM) gesammelt haben sehr leicht aufgespült und haben keinerlei Haftung zum Glaskom selbst. Dadurch ist das Rückspülen eines mit neutralem Filtermaterial (nbFM) gefüllte Filters mit niedrigeren Wasserdrücken und Volumenströmen gegenüber Filtern mit herkömmlichen Filtermaterialien möglich, was sich auch in einer erhöhten Energieeffizienz niederschlägt. Da sich am neutralen Filtermaterial ( nbFM ) keine bakteriellen Anhaftungen und dadurch auch keine mit dem Filtermaterial selbst sowie Bakterien als Verbund zugewachsenen Bereiche im Filter bilden können, sind keine zusätzlichen Maßnahmen, wie Druckluft oder Chlorschock beim Rückspülen des Filters notwendig.

Die Erfindung soll nachstehend an einem Ausführungsbeispiel näher erläutert werden.

Ein biologisch behandeltes Teichwasser eines Schwimmteiches soll mittels Filtertechnik so gereinigt werden, dass keine chemischen Zusätze zum Einsatz kommen. Dazu wird in einer Filteranlage, durch welches das zu reinigende Wasser durchgeleitet wird, das erfindungsgemäße Filtermaterial, bestehend aus einer Körnung aus neutralen Glas mit einem Kornspektrum von 0,5 bis 32,0 mm in dem Filterbehälter angeordnet. Das erfindungsgemäße Filtermaterial kann dabei eine Körnung aus 100% Glasperlen, aus 100% Glassplitt oder aus einer Mischung von neutralen Glasbruchstücken und Glasperlen aufweisen, wobei das Verhältnis und auch die einzusetzenden Kombandspektren auf den Einsatzfall und dabei auf den Verschmutzungsgrad, die Reinigungszeit und die Größe der herauszufiltemden Materialen aus dem Wasser abzustimmen sind. Wichtig dabei ist die Neutralität des Filtermaterials und die glatte Oberfläche der einzelnen Körner, um ein Anhaften von Bakterien zu verhindern und das System mit nicht benötigten Ladungen zu belasten. Dadurch ist eine effiziente Reinigung durch Rückspülen des Filters zur Entfernung des herausgefilterten Materials gewährleistet

## Patentansprüche

1. Filtermaterial für Filter in Wasserbehandlungs- und Aufbereitungsanlagen für biologisch behandeltes Wasser, **dadurch gekennzeichnet, dass** es aus einer mit zur Größe der zu filtrierenden Schmutzstoffe abgestimmten Korngrößenspektrum ausgestatteten Körnung aus ladungstechnisch neutralem Glas besteht.

2. Filtermaterial für Filter in Wasserbehandlungs- und Aufbereitungsanlagen für biologisch behandeltes Wasser, nach dem Anspruch 1, **dadurch gekennzeichnet, dass** die Körnung aus neutralem Glas Korngrößen zwischen 0,5mm bis 30 mm aufweist.

3. Filtermaterial für Filter in Wasserbehandlungs- und Aufbereitungsanlagen für biologisch behandeltes Wasser, nach einem der Ansprüche 1 und 2, **dadurch gekennzeichnet, dass** die Körnung aus neutralem Glas, aus gebrochenem Glas und/oder aus Glaskügelchen besteht.

4. Filtermaterial für Filter in Wasserbehandlungs- und Aufbereitungsanlagen für biologisch behandeltes Wasser, nach einem der Ansprüche 1 bis 3, **dadurch gekennzeichnet, dass** die Körnung aus neutralem Glas aus recyceltem, farblosen und/oder farbigen Glas besteht.
